# EUROPEAN PATENT SPECIFICATION

(11) **EP 4 162 755 B1**
(45) Date of publication and mention of the grant of the patent: **13.05.2026**
(21) Application number: 20939401.4
(22) Date of filing: 03.06.2020
(51) Int. Cl.: H04W 72/12, H04W 72/11, H04W 72/542

(54) **PACKET JITTER AND LATENCY MITIGATION**
PAKETJITTER- UND LATENZMINDERUNG
ATTÉNUATION DE GIGUE ET DE LATENCE DE PAQUET

(43) Date of publication of application: 12.04.2023
(73) Proprietor: QUALCOMM INCORPORATED, San Diego, California 92121-1714 (US)
(72) Inventor: PARK, Cheol Hee, San Diego, California 92121-1714 (US); GUO, Hongjin, San Diego, California 92121-1714 (US); HAO, Zengyu, San Diego, California 92121-1714 (US); HOU, Jintao, San Diego, California 92121-1714 (US); BABU REDDY, Rejus, San Diego, California 92121-1714 (US); RONGALA, Santosh Kumar, San Diego, California 92121-1714 (US); XIAO, Gang Andy, San Diego, California 92121-1714 (US)
(74) Representative: Bardehle Pagenberg Partnerschaft mbB Patentanwälte Rechtsanwälte
(86) International application number: PCT/CN2020/094102
(87) International publication number: WO 2021/243595

(56) References cited:
- WO-A1-2019/187562
- WO-A1-2019/219017
- WO-A1-2020/102177
- CN-A- 110 740 522
- CN-A- 111 149 397
- US-A1- 2020 037 341
- US-A1- 2020 154 440
- ZTE CORPORATION: "Discussion on latency reduction", vol. RAN WG2, no. Athens, Greece; 20180226 - 20180302, 14 February 2018 (2018-02-14), XP051399054, Retrieved from the Internet <URL:http://www.3gpp.org/ftp/tsg%5Fran/WG2%5FRL2/TSGR2%5F101/Docs/> [retrieved on 20180214]
- INTEL CORPORATION: "Sidelink measurements for V2V sensing and resource re-selection procedures", 3GPP DRAFT; R1-166511 INTEL - V2V MEASUREMENT, vol. RAN WG1, 13 August 2016 (2016-08-13), Gothenburg, Sweden, pages 1 - 5, XP051132802

## Description

### FIELD OF THE DISCLOSURE

Aspects of the present disclosure generally relate to wireless communication and to techniques and apparatuses for packet jitter and latency mitigation.

### BACKGROUND

Wireless communication systems, as are for example described in WO 2019/187562 A1, are widely deployed to provide various telecommunication services such as telephony, video, data, messaging, and broadcasts. Typical wireless communication systems may employ multiple-access technologies capable of supporting communication with multiple users by sharing available system resources (e.g., bandwidth, transmit power, and/or the like). Examples of such multiple-access technologies include code division multiple access (CDMA) systems, time division multiple access (TDMA) systems, frequency-division multiple access (FDMA) systems, orthogonal frequency-division multiple access (OFDMA) systems, single-carrier frequency-division multiple access (SC-FDMA) systems, time division synchronous code division multiple access (TD-SCDMA) systems, and Long Term Evolution (LTE). LTE/LTE-Advanced is a set of enhancements to the Universal Mobile Telecommunications System (UMTS) mobile standard promulgated by the Third Generation Partnership Project (3GPP).

A wireless network may include a number of base stations (BSs) that can support communication for a number of user equipment (UEs). A user equipment (UE) may communicate with a base station (BS) via the downlink and uplink. The downlink (or forward link) refers to the communication link from the BS to the UE, and the uplink (or reverse link) refers to the communication link from the UE to the BS. As will be described in more detail herein, a BS may be referred to as a Node B, a gNB, an access point (AP), a radio head, a transmit receive point (TRP), a New Radio (NR) BS, a 5G Node B, and/or the like.

The above multiple access technologies have been adopted in various telecommunication standards to provide a common protocol that enables different user equipment to communicate on a municipal, national, regional, and even global level. New Radio (NR), which may also be referred to as 5G, is a set of enhancements to the LTE mobile standard promulgated by the Third Generation Partnership Project (3GPP). NR is designed to better support mobile broadband Internet access by improving spectral efficiency, lowering costs, improving services, making use of new spectrum, and better integrating with other open standards using orthogonal frequency division multiplexing (OFDM) with a cyclic prefix (CP) (CP-OFDM) on the downlink (DL), using CP-OFDM and/or SC-FDM (e.g., also known as discrete Fourier transform spread OFDM (DFT-s-OFDM)) on the uplink (UL), as well as supporting beamforming, multiple-input multiple-output (MIMO) antenna technology, and carrier aggregation. As the demand for mobile broadband access continues to increase, further improvements in LTE, NR, and other radio access technologies remain useful.

### SUMMARY

The invention is defined by the independent claims. Preferred embodiments are set out in the dependent claims.

### BRIEF DESCRIPTION OF THE DRAWINGS

So that the above-recited features of the present disclosure can be understood in detail, a more particular description, briefly summarized above, may be had by reference to aspects, some of which are illustrated in the appended drawings. It is to be noted, however, that the appended drawings illustrate only certain typical aspects of this disclosure and are therefore not to be considered limiting of its scope, for the description may admit to other equally effective aspects. The same reference numbers in different drawings may identify the same or similar elements.
Fig. 1 is a diagram illustrating an example of a wireless network, in accordance with various aspects of the present disclosure.
Fig. 2 is a diagram illustrating an example of a base station in communication with a UE in a wireless network, in accordance with various aspects of the present disclosure.
Figs. 3A-3F are diagrams illustrating examples associated with packet jitter and latency mitigation, in accordance with various aspects of the present disclosure.
Fig. 4 is a diagram illustrating an example process associated with packet jitter and latency mitigation, in accordance with various aspects of the present disclosure.
Fig. 5 is a block diagram of an example apparatus for wireless communication, in accordance with various aspects of the present disclosure.

### DETAILED DESCRIPTION

Various aspects of the disclosure are described more fully hereinafter with reference to the accompanying drawings. This disclosure may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art. Based on the teachings herein, one skilled in the art should appreciate that the scope of the disclosure is intended to cover any aspect of the disclosure disclosed herein, whether implemented independently of or combined with any other aspect of the disclosure. For example, an apparatus may be implemented or a method may be practiced using any number of the aspects set forth herein. In addition, the scope of the disclosure is intended to cover such an apparatus or method which is practiced using other structure, functionality, or structure and functionality in addition to or other than the various aspects of the disclosure set forth herein. It should be understood that any aspect of the disclosure disclosed herein may be embodied by one or more elements of a claim.

Several aspects of telecommunication systems will now be presented with reference to various apparatuses and techniques. These apparatuses and techniques will be described in the following detailed description and illustrated in the accompanying drawings by various blocks, modules, components, circuits, steps, processes, algorithms, and/or the like (collectively referred to as "elements"). These elements may be implemented using hardware, software, or combinations thereof. Whether such elements are implemented as hardware or software depends upon the particular application and design constraints imposed on the overall system.

It should be noted that while aspects may be described herein using terminology commonly associated with a 5G or NR radio access technologies (RAT), aspects of the present disclosure can be applied to other RATs, such as a 3G RAT, a 4G RAT, and/or a RAT subsequent to 5G (e.g., 6G).

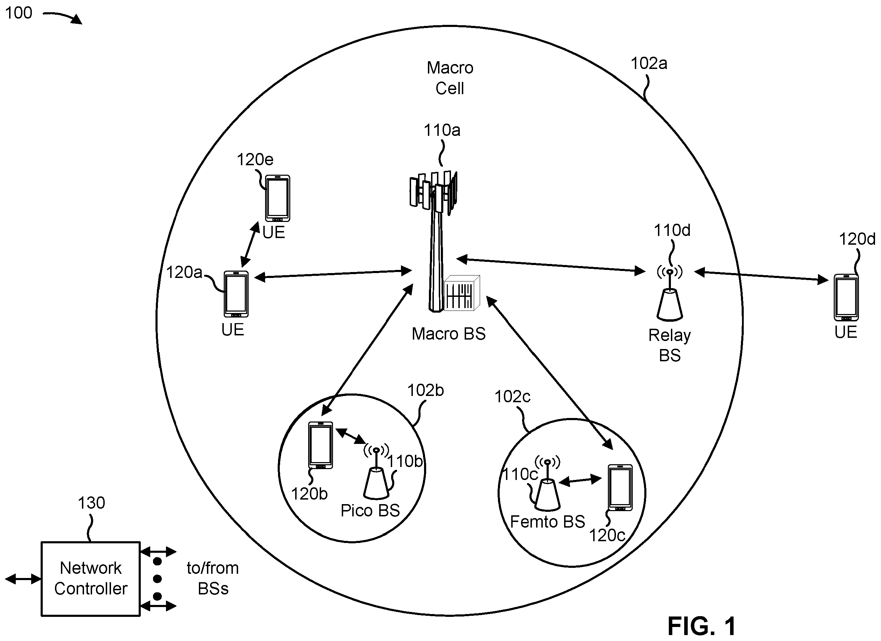

Fig. 1 is a diagram illustrating an example of a wireless network 100, in accordance with various aspects of the present disclosure. The wireless network 100 may be or may include elements of a 5G (NR) network, an LTE network, and/or the like. The wireless network 100 may include a number of base stations 110 (shown as BS 110a, BS 110b, BS 110c, and BS 110d) and other network entities. A base station (BS) is an entity that communicates with user equipment (UEs) and may also be referred to as an NR BS, a Node B, a gNB, a 5G node B (NB), an access point, a transmit receive point (TRP), and/or the like. Each BS may provide communication coverage for a particular geographic area. In 3GPP, the term "cell" can refer to a coverage area of a BS and/or a BS subsystem serving this coverage area, depending on the context in which the term is used.

A BS may provide communication coverage for a macro cell, a pico cell, a femto cell, and/or another type of cell. A macro cell may cover a relatively large geographic area (e.g., several kilometers in radius) and may allow unrestricted access by UEs with service subscription. A pico cell may cover a relatively small geographic area and may allow unrestricted access by UEs with service subscription. A femto cell may cover a relatively small geographic area (e.g., a home) and may allow restricted access by UEs having association with the femto cell (e.g., UEs in a closed subscriber group (CSG)). A BS for a macro cell may be referred to as a macro BS. A BS for a pico cell may be referred to as a pico BS. A BS for a femto cell may be referred to as a femto BS or a home BS. In the example shown in Fig. 1, a BS 110a may be a macro BS for a macro cell 102a, a BS 110b may be a pico BS for a pico cell 102b, and a BS 110c may be a femto BS for a femto cell 102c. A BS may support one or multiple (e.g., three) cells. The terms "eNB", "base station", "NR BS", "gNB", "TRP", "AP", "node B", "5G NB", and "cell" may be used interchangeably herein.

In some aspects, a cell may not necessarily be stationary, and the geographic area of the cell may move according to the location of a mobile BS. In some aspects, the BSs may be interconnected to one another and/or to one or more other BSs or network nodes (not shown) in the wireless network 100 through various types of backhaul interfaces such as a direct physical connection, a virtual network, and/or the like using any suitable transport network.

Wireless network 100 may also include relay stations. A relay station is an entity that can receive a transmission of data from an upstream station (e.g., a BS or a UE) and send a transmission of the data to a downstream station (e.g., a UE or a BS). A relay station may also be a UE that can relay transmissions for other UEs. In the example shown in Fig. 1, a relay station 110d may communicate with macro BS 110a and a UE 120d in order to facilitate communication between BS 110a and UE 120d. A relay station may also be referred to as a relay BS, a relay base station, a relay, and/or the like.

Wireless network 100 may be a heterogeneous network that includes BSs of different types, e.g., macro BSs, pico BSs, femto BSs, relay BSs, and/or the like. These different types of BSs may have different transmit power levels, different coverage areas, and different impacts on interference in wireless network 100. For example, macro BSs may have a high transmit power level (e.g., 5 to 40 watts) whereas pico BSs, femto BSs, and relay BSs may have lower transmit power levels (e.g., 0.1 to 2 watts).

A network controller 130 may couple to a set of BSs and may provide coordination and control for these BSs. Network controller 130 may communicate with the BSs via a backhaul. The BSs may also communicate with one another, e.g., directly or indirectly via a wireless or wireline backhaul.

UEs 120 (e.g., 120a, 120b, 120c) may be dispersed throughout wireless network 100, and each UE may be stationary or mobile. A UE may also be referred to as an access terminal, a terminal, a mobile station, a subscriber unit, a station, and/or the like. A UE may be a cellular phone (e.g., a smart phone), a personal digital assistant (PDA), a wireless modem, a wireless communication device, a handheld device, a laptop computer, a cordless phone, a wireless local loop (WLL) station, a tablet, a camera, a gaming device, a netbook, a smartbook, an ultrabook, a medical device or equipment, biometric sensors/devices, wearable devices (smart watches, smart clothing, smart glasses, smart wrist bands, smart jewelry (e.g., smart ring, smart bracelet)), an entertainment device (e.g., a music or video device, or a satellite radio), a vehicular component or sensor, smart meters/sensors, industrial manufacturing equipment, a global positioning system device, or any other suitable device that is configured to communicate via a wireless or wired medium.

Some UEs may be considered machine-type communication (MTC) or evolved or enhanced machine-type communication (eMTC) UEs. MTC and eMTC UEs include, for example, robots, drones, remote devices, sensors, meters, monitors, location tags, and/or the like, that may communicate with a base station, another device (e.g., remote device), or some other entity. A wireless node may provide, for example, connectivity for or to a network (e.g., a wide area network such as Internet or a cellular network) via a wired or wireless communication link. Some UEs may be considered Internet-of-Things (IoT) devices, and/or may be implemented as NB-IoT (narrowband internet of things) devices. Some UEs may be considered a Customer Premises Equipment (CPE). UE 120 may be included inside a housing that houses components of UE 120, such as processor components, memory components, and/or the like. In some aspects, the processor components and the memory components may be coupled together. For example, the processor components (e.g., one or more processors) and the memory components (e.g., a memory) may be operatively coupled, communicatively coupled, electronically coupled, electrically coupled, and/or the like.

In general, any number of wireless networks may be deployed in a given geographic area. Each wireless network may support a particular RAT and may operate on one or more frequencies. A RAT may also be referred to as a radio technology, an air interface, and/or the like. A frequency may also be referred to as a carrier, a frequency channel, and/or the like. Each frequency may support a single RAT in a given geographic area in order to avoid interference between wireless networks of different RATs. In some cases, NR or 5G RAT networks may be deployed.

In some aspects, two or more UEs 120 (e.g., shown as UE 120a and UE 120e) may communicate directly using one or more sidelink channels (e.g., without using a base station 110 as an intermediary to communicate with one another). For example, the UEs 120 may communicate using peer-to-peer (P2P) communications, device-to-device (D2D) communications, a vehicle-to-everything (V2X) protocol (e.g., which may include a vehicle-to-vehicle (V2V) protocol, a vehicle-to-infrastructure (V2I) protocol, and/or the like), a mesh network, and/or the like. In this case, the UE 120 may perform scheduling operations, resource selection operations, and/or other operations described elsewhere herein as being performed by the base station 110.

As indicated above, Fig. 1 is provided as an example. Other examples may differ from what is described with regard to Fig. 1.

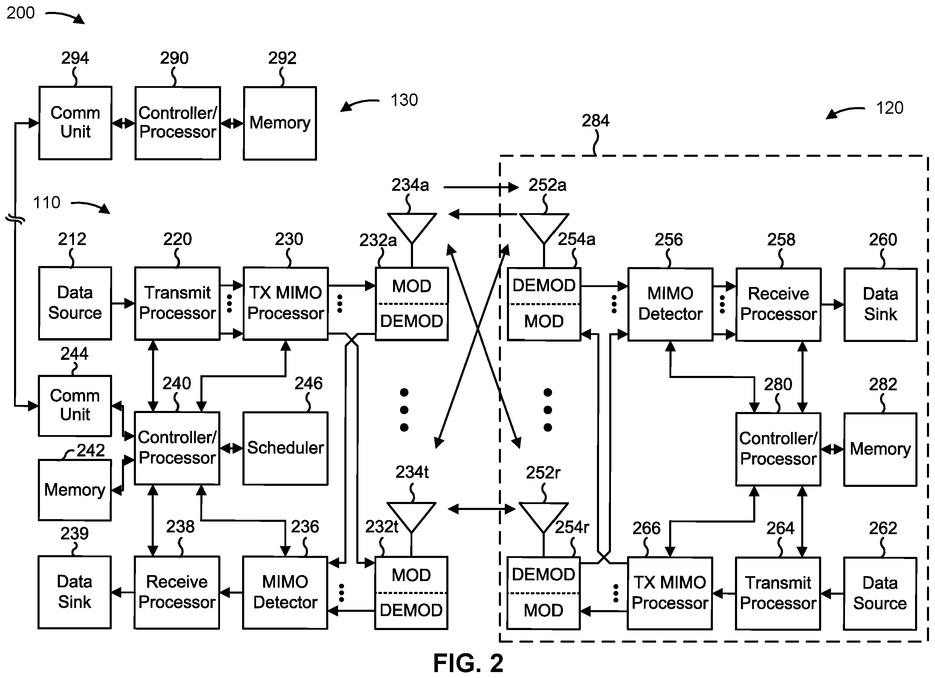

Fig. 2 is a diagram illustrating an example 200 of a base station 110 in communication with a UE 120 in a wireless network 100, in accordance with various aspects of the present disclosure. Base station 110 may be equipped with T antennas 234a through 234t, and UE 120 may be equipped with R antennas 252a through 252r, where in general T ≥ 1 and R ≥ 1.

At base station 110, a transmit processor 220 may receive data from a data source 212 for one or more UEs, select one or more modulation and coding schemes (MCS) for each UE based at least in part on channel quality indicators (CQIs) received from the UE, process (e.g., encode and modulate) the data for each UE based at least in part on the MCS(s) selected for the UE, and provide data symbols for all UEs. Transmit processor 220 may also process system information (e.g., for semi-static resource partitioning information (SRPI) and/or the like) and control information (e.g., CQI requests, grants, upper layer signaling, and/or the like) and provide overhead symbols and control symbols. Transmit processor 220 may also generate reference symbols for reference signals (e.g., a cell-specific reference signal (CRS), a demodulation reference signal (DMRS), and/or the like) and synchronization signals (e.g., the primary synchronization signal (PSS) and secondary synchronization signal (SSS)). A transmit (TX) multiple-input multiple-output (MIMO) processor 230 may perform spatial processing (e.g., precoding) on the data symbols, the control symbols, the overhead symbols, and/or the reference symbols, if applicable, and may provide T output symbol streams to T modulators (MODs) 232a through 232t. Each modulator 232 may process a respective output symbol stream (e.g., for OFDM and/or the like) to obtain an output sample stream. Each modulator 232 may further process (e.g., convert to analog, amplify, filter, and upconvert) the output sample stream to obtain a downlink signal. T downlink signals from modulators 232a through 232t may be transmitted via T antennas 234a through 234t, respectively.

At UE 120, antennas 252a through 252r may receive the downlink signals from base station 110 and/or other base stations and may provide received signals to demodulators (DEMODs) 254a through 254r, respectively. Each demodulator 254 may condition (e.g., filter, amplify, downconvert, and digitize) a received signal to obtain input samples. Each demodulator 254 may further process the input samples (e.g., for OFDM and/or the like) to obtain received symbols. A MIMO detector 256 may obtain received symbols from all R demodulators 254a through 254r, perform MIMO detection on the received symbols if applicable, and provide detected symbols. A receive processor 258 may process (e.g., demodulate and decode) the detected symbols, provide decoded data for UE 120 to a data sink 260, and provide decoded control information and system information to a controller/processor 280. A channel processor may determine reference signal received power (RSRP), received signal strength indicator (RSSI), reference signal received quality (RSRQ), channel quality indicator (CQI), and/or the like. In some aspects, one or more components of UE 120 may be included in a housing 284.

Network controller 130 may include communication unit 294, controller/processor 290, and memory 292. Network controller 130 may include, for example, one or more devices in a core network. Network controller 130 may communicate with base station 110 via communication unit 294.

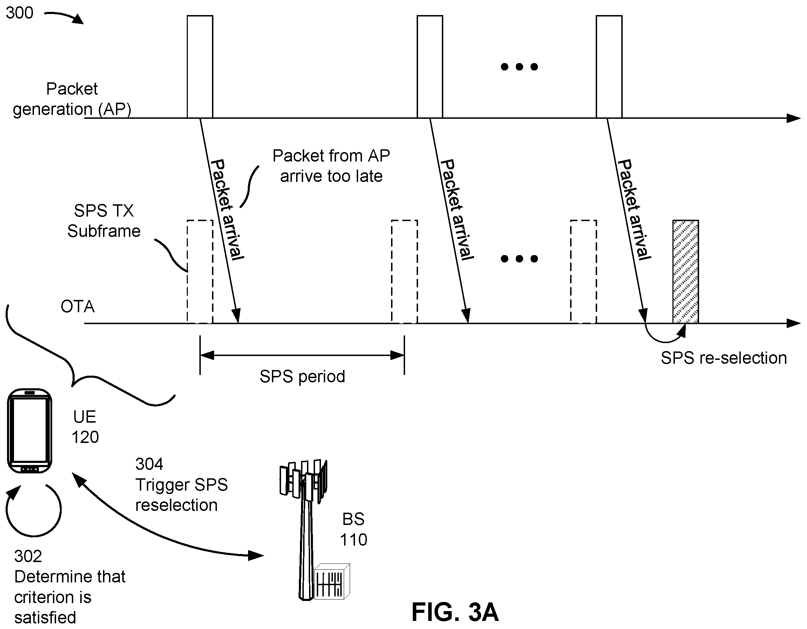

On the uplink, at UE 120, a transmit processor 264 may receive and process data from a data source 262 and control information (e.g., for reports that include RSRP, RSSI, RSRQ, CQI, and/or the like) from controller/processor 280. Transmit processor 264 may also generate reference symbols for one or more reference signals. The symbols from transmit processor 264 may be precoded by a TX MIMO processor 266 if applicable, further processed by modulators 254a through 254r (e.g., for DFT-s-OFDM, CP-OFDM, and/or the like), and transmitted to base station 110. In some aspects, the UE 120 includes a transceiver. The transceiver may include any combination of antenna(s) 252, modulators and/or demodulators 254, MIMO detector 256, receive processor 258, transmit processor 264, and/or TX MIMO processor 266. The transceiver may be used by a processor (e.g., controller/processor 280) and memory 282 to perform aspects of any of the methods described herein, for example, as described with reference to Figs. 3A-4.

At base station 110, the uplink signals from UE 120 and other UEs may be received by antennas 234, processed by demodulators 232, detected by a MIMO detector 236 if applicable, and further processed by a receive processor 238 to obtain decoded data and control information sent by UE 120. Receive processor 238 may provide the decoded data to a data sink 239 and the decoded control information to controller/processor 240. Base station 110 may include communication unit 244 and communicate to network controller 130 via communication unit 244. Base station 110 may include a scheduler 246 to schedule UEs 120 for downlink and/or uplink communications. In some aspects, the base station 110 includes a transceiver. The transceiver may include any combination of antenna(s) 234, modulators and/or demodulators 232, MIMO detector 236, receive processor 238, transmit processor 220, and/or TX MIMO processor 230. The transceiver may be used by a processor (e.g., controller/processor 240) and memory 242 to perform aspects of any of the methods described herein, for example, as described with reference to Figs. 3A-4.

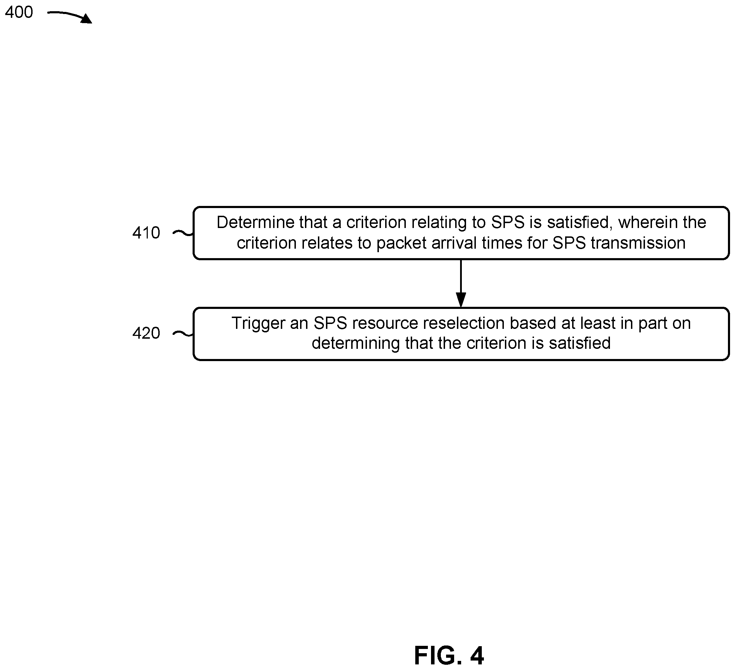

Controller/processor 240 of base station 110, controller/processor 280 of UE 120, and/or any other component(s) of Fig. 2 may perform one or more techniques associated with packet jitter and latency mitigation, as described in more detail elsewhere herein. For example, controller/processor 240 of base station 110, controller/processor 280 of UE 120, and/or any other component(s) of Fig. 2 may perform or direct operations of, for example, process 400 of Fig. 4 and/or other processes as described herein. Memories 242 and 282 may store data and program codes for base station 110 and UE 120, respectively. In some aspects, memory 242 and/or memory 282 may include a non-transitory computer-readable medium storing one or more instructions (e.g., code, program code, and/or the like) for wireless communication. For example, the one or more instructions, when executed (e.g., directly, or after compiling, converting, interpreting, and/or the like) by one or more processors of the base station 110 and/or the UE 120, may cause the one or more processors, the UE 120, and/or the base station 110 to perform or direct operations of, for example, process 400 of Fig. 4 and/or other processes as described herein. In some aspects, executing instructions may include running the instructions, converting the instructions, compiling the instructions, interpreting the instructions, and/or the like.

In some aspects, a transmitter device, such as UE 120, BS 110, and/or the like may include means for determining that a criterion relating to semi-persistent scheduling (SPS) is satisfied, wherein the criterion relates to packet arrival times for SPS transmission, means for triggering an SPS resource reselection based at least in part on determining that the criterion is satisfied, and/or the like. In some aspects, such means may include one or more components of UE 120 described in connection with Fig. 2, such as controller/processor 280, transmit processor 264, TX MIMO processor 266, MOD 254, antenna 252, DEMOD 254, MIMO detector 256, receive processor 258, and/or the like. In some aspects, such means may include one or more components of BS 110 described in connection with Fig. 2, such as controller/processor 240, transmit processor 220, TX MIMO processor 230, MOD 232, antenna 234, DEMOD 232, MIMO detector 236, receive processor 238, and/or the like.

While blocks in Fig. 2 are illustrated as distinct components, the functions described above with respect to the blocks may be implemented in a single hardware, software, or combination component or in various combinations of components. For example, the functions described with respect to the transmit processor 264, the receive processor 258, and/or the TX MIMO processor 266 may be performed by or under the control of processor 280.

As indicated above, Fig. 2 is provided as an example. Other examples may differ from what is described with regard to Fig. 2.

In some communications systems, UEs, such as cellular-vehicle-to-everything (C-V2X) UEs, may use SPS or event-driven transmission to transmit messages. For example, a C-V2X UE may use SPS resources to transmit a safety message generated by an application process (AP) of the C-V2X UE at an application layer. In SPS transmission, a UE may periodically transmit packets using periodically reserved transmission resources. For example, the UE may receive information identifying periodic subframes and/or resource blocks in which the UE is to transmit. In contrast, in event-driven transmission, the UE may receive a dedicated grant of a resource for a one-time transmission.

To transmit a packet, a UE may receive a generated packet from an application process at an over-the-air (OTA) layer of a modem of the UE and may transmit the generated packet from the OTA layer to a BS, another UE, and/or the like. However, a packet arrival time from the application process may be subject to an SPS arrival jitter. For example, although the packet is scheduled to arrive at a scheduled SPS arrival time, the packet may actually arrive before or after the SPS arrival time. This may result from application process loading delays, time jitter, modem loading delays, and/or the like. The SPS arrival time may be selected based at least in part on a processing delay between the packet being received at the OTA layer of the modem and the packet being transmitted by the UE.

SPS arrival jitter or packet jitter may result in degraded network performance, such as an inter-packet-gap (IPG) issue, a packet latency issue, a block error rate (BLER) issue, and/or the like. For example, when a packet arrives after a configured SPS arrival time for a first SPS resource, the UE may drop the packet from transmission or delay the packet for transmission using a second, subsequent SPS resource. Similarly, when the packet arrives earlier than the configured SPS arrival time, a delay until the first SPS resource occurs may result in excessive latency for transmitting the packet. Some techniques may attempt to enhance an accuracy with which packets arrive at the OTA layer of the modem, thereby minimizing SPS arrival jitter; however, such solutions may still fail to achieve a threshold level of accuracy. Moreover, in some cases, a presence of reserved subframes may cause interruptions to SPS timing even when packets are arriving at the SPS arrival time.

Some aspects described herein mitigate packet jitter and latency for SPS-based transmission. For example, a transmitter device, such as a UE, may determine that a criterion relating to SPS transmission is satisfied and may trigger an SPS resource reselection. For example, the transmitter device may detect that a threshold quantity of packets have arrived after an SPS arrival time and may trigger an SPS resource reselection to identify one or more SPS resources to enable subsequent packets to arrive at an SPS arrival time for the one or more SPS resources. Additionally, or alternatively, the transmitter device may determine to perform the SPS resource reselection based at least in part on a sidelink synchronization signal (SLSS) being configured, a set of accumulated SLSS subframes satisfying a threshold quantity, and an SPS transmission latency satisfying a latency threshold.

Additionally, or alternatively, the transmitter device may determine to perform the SPS resource reselection based at least in part on detecting that a set of accumulated reserved subframes is associated with causing SPS transmission latency to satisfy a threshold latency. In some aspects, the transmitter device may select one or more SPS resources during an SPS resource reselection procedure to ensure that a jitter spread (e.g., a size of an SPS arrival jitter) for subsequent packets results in packets arriving within a threshold amount of an SPS arrival time. In this way, the transmitter device ensures a reduction in dropped packets, packet latency, and/or the like.

Figs. 3A-3F are diagrams illustrating an example 300 associated with packet jitter and latency mitigation, in accordance with various aspects of the present disclosure. As shown in Fig. 3A-3F, example 300 includes a UE 120, which may have an application process (AP) layer and an over-the-air (OTA) interface layer.

As further shown in Fig. 3A, a set of packets may be generated at an application process layer of UE 120. For example, UE 120 may determine to transmit information using SPS resources and may generate a packet to be transmitted using the SPS resources. In this case, each packet of the set of packets may arrive at an OTA layer of a modem of UE 120 after a scheduled SPS arrival time. For example, as a result of processing delays at the application process layer, the OTA interface layer, and/or the like, a packet may arrive after an SPS arrival time at which the packet is scheduled to arrive to ensure time to prepare the packet for SPS transmission. In this case, UE 120 may drop the packet, thereby resulting in a communication interruption, or delay the packet to a next SPS transmission opportunity, thereby resulting in excess latency.

As further shown in Fig. 3A, and by reference number 302, UE 120 may determine that a threshold criterion is satisfied. For example, UE 120 may determine that the quantity of consecutive packets received after the SPS arrival time satisfies a threshold. Additionally, or alternatively, UE 120 may determine that the threshold criterion is satisfied by a threshold quantity of packets (e.g., consecutive or nonconsecutive packets) arriving after the SPS arrival time during a threshold period of time. In this case, as shown by reference number 304, UE 120 may trigger an SPS reselection procedure. For example, UE 120 may determine a different set of SPS resources for subsequent SPS transmissions, such that packet generation and arrival occurs at approximately an SPS arrival time for the subsequent SPS transmissions rather than after the SPS arrival time.

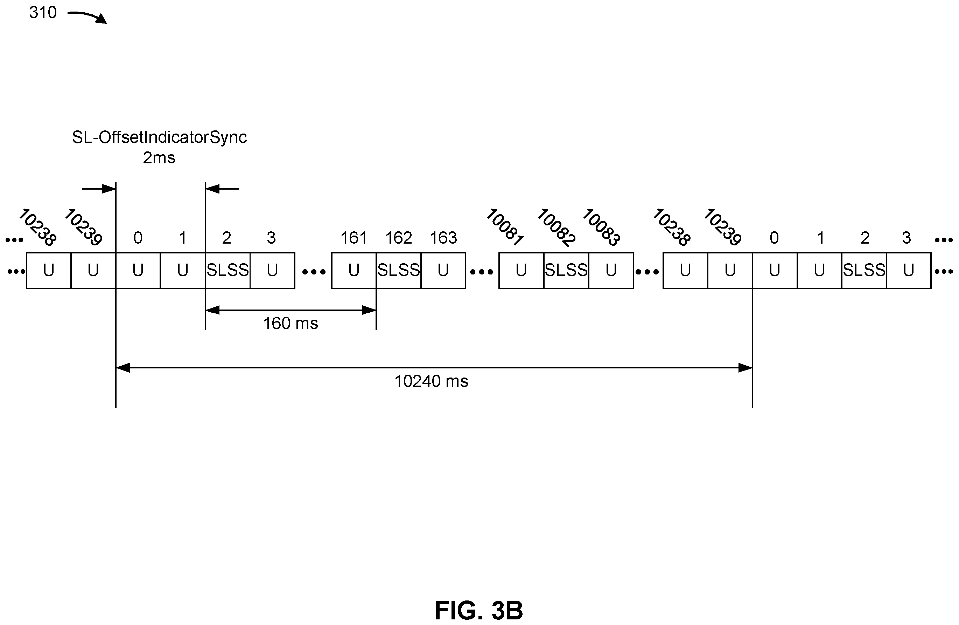

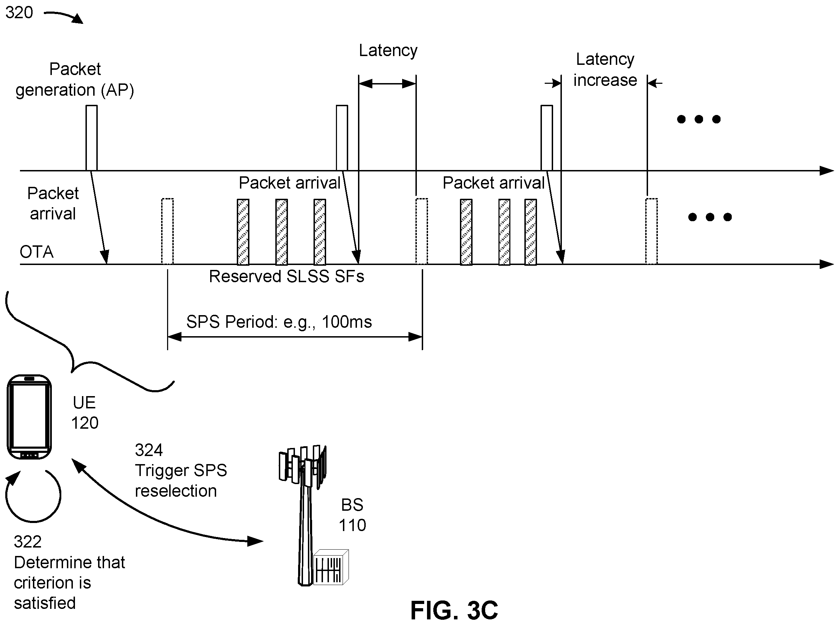

As shown in Fig. 3B, and by example 310, in some cases, an SLSS may be configured for UE 120. The SLSS may be used to ensure sidelink synchronization, such as in V2X deployments and/or the like. For example, the SLSS may convey a primary sidelink synchronization signal (PSSS), a secondary sidelink synchronization signal (SSSS), and/or the like. In this case, periodic resources may be reserved for SLSS subframes. For example, resources may be reserved, in a communication system, every 160 milliseconds (ms), as shown in Fig. 3B. In some aspects, a single subframe may be reserved for the SLSS or a plurality of subframes may be reserved for the SLSS. As shown in Fig. 3C, and by example 320, when an SLSS is configured for UE 120, actual SPS transmission may occur at an SPS period, which may be after a particular quantity of SLSS subframes.

As a result, as shown in example 320, a latency may accumulate between packet arrival at the OTA layer and SPS transmission opportunities. As shown by reference number 322, UE 120 may determine that a criterion is satisfied. For example, UE 120 may determine that a quantity of accumulated SLSS subframes satisfies a threshold quantity of subframes and that SPS transmission latency satisfies a latency threshold. As shown by reference number 324, UE 120 may trigger SPS resource reselection to identify different SPS resources to mitigate the SPS transmission latency resulting from the accumulated SLSS subframes.

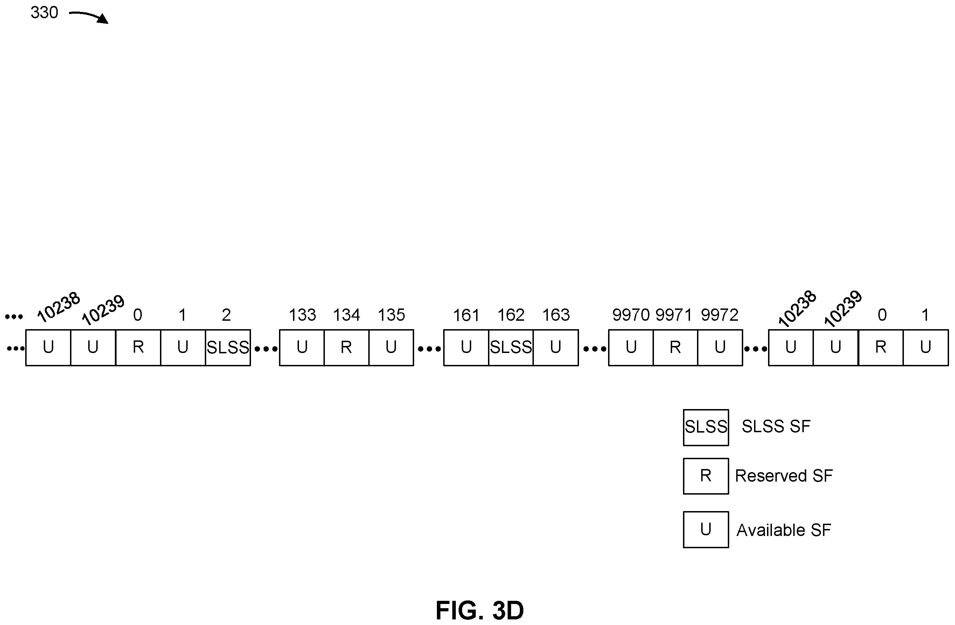

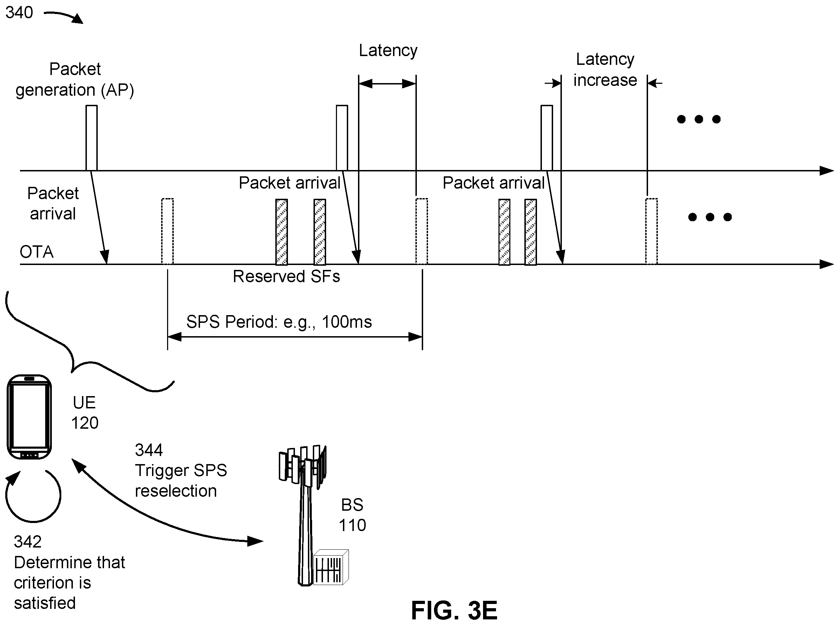

As shown in Fig. 3D, and by example 330, in some cases, one or more subframes may be classified as reserved subframes. For example, a communication system may include subframes that are not logical subframes used for reception and/or transmission. In this case, "reserved" subframes may refer to subframes other than time division duplexing (TDD) downlink subframes, special subframes, SLSS subframes, and/or the like for which transmission and/or reception is not to occur. Such reserved subframes may occur periodically, as shown in Fig. 3D. As shown in Fig. 3E, and by example 340, when reserved subframes are configured for a communication system, actual SPS transmission may occur at an SPS period, which may be after a particular quantity of reserved subframes.

As a result, as shown in example 340, a latency may accumulate between packet arrival at the OTA layer and SPS transmission opportunities. As shown by reference number 342, UE 120 may determine that a criterion is satisfied. For example, UE 120 may determine that a quantity of accumulated reserved subframes satisfies a threshold quantity of subframes and that SPS transmission latency satisfies a latency threshold. As shown by reference number 344, UE 120 may trigger SPS resource reselection to identify different SPS resources to mitigate the SPS transmission latency resulting from the accumulated reserved subframes.

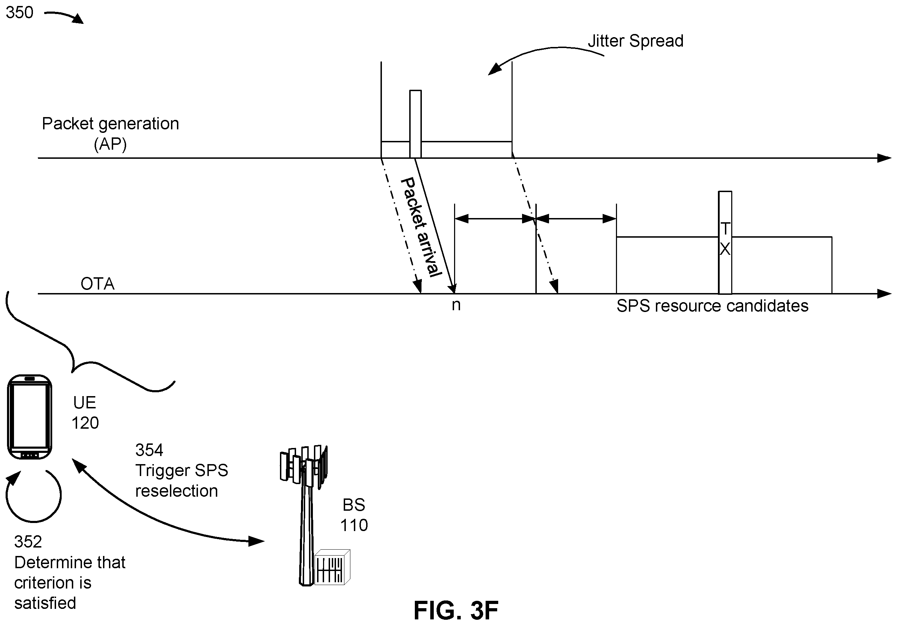

As shown in Fig. 3F, and by example 350, a time at which a packet arrives for SPS transmission may vary from packet to packet. The variance may be termed a jitter spread. As shown by reference number 352, UE 120 may determine the jitter spread. For example, UE 120 may determine actual arrival times, relative to an SPS arrival time, for a set of packets and may determine a maximum jitter spread, a percentile jitter spread (e.g., a jitter spread that captures a threshold percentile of actual packet arrival times), and/or the like. Additionally, or alternatively, UE 120 may determine the jitter spread based at least in part on a loading of a modem processor of a modem of UE 120 (e.g., under a wireless wide area concurrency configuration, an LTE carrier aggregation configuration, and/or the like). As shown by reference number 354, UE 120 may trigger SPS resource reselection (e.g., based at least in part on detecting satisfaction of a threshold criterion, as described above) and may determine one or more SPS resources based at least in part on the jitter spread. For example, UE 120 may determine one or more SPS resource candidates for which an SPS arrival time occurs after a period of time defined by the jitter spread. In this case, when jitter results in a delay to packet arrival, packet arrival still occurs at or before the SPS arrival time.

As indicated above, Fig. 3A-3F are provided as an example. Other examples may differ from what is described with respect to Fig. 3A-3F.

Fig. 4 is a diagram illustrating an example process 400 performed, for example, by a transmitter device, in accordance with various aspects of the present disclosure. Example process 400 is an example where the transmitter device (e.g., UE 120, BS 110, and/or the like) performs operations associated with packet jitter and latency mitigation.

As shown in Fig. 4, in some aspects, process 400 may include determining that a criterion relating to SPS is satisfied, wherein the criterion relates to packet arrival times for SPS transmission (block 410). For example, the transmitter device (e.g., using controller/processor 240, controller/processor 280, and/or the like) may determine that a criterion relating to SPS is satisfied, as described above. In some aspects, the criterion relates to packet arrival times for SPS transmission.

As further shown in Fig. 4, in some aspects, process 400 may include triggering an SPS resource reselection based at least in part on determining that the criterion is satisfied (block 420). For example, the transmitter device (e.g., using controller/processor 240, transmit processor 220, TX MIMO processor 230, MOD 232, antenna 234, controller/processor 280, transmit processor 264, TX MIMO processor 266, MOD 254, antenna 252, and/or the like) may trigger an SPS resource reselection based at least in part on determining that the criterion is satisfied, as described above.

Process 400 may include additional aspects, such as any single aspect or any combination of aspects described below and/or in connection with one or more other processes described elsewhere herein.

In a first aspect, the criterion is a threshold quantity of packets arriving for transmission from an application process after a configured SPS arrival time.

In a second aspect, alone or in combination with the first aspect, the SPS resource reselection comprises reselection to one or more SPS resources determined based at least in part on the packet arrival times of the threshold quantity of packets.

In a third aspect, alone or in combination with one or more of the first and second aspects, a sidelink synchronization signal (SLSS) is configured, and the criterion is a threshold quantity of accumulated SLSS subframes satisfying a first threshold value and an SPS transmission latency satisfying a second threshold value.

In a fourth aspect, alone or in combination with one or more of the first through third aspects, the criterion is a threshold SPS transmission latency corresponding to a threshold accumulation of reserved subframes.

In a fifth aspect, alone or in combination with one or more of the first through fourth aspects, triggering the SPS resource reselection comprises reselecting SPS resources to one or more resources determined based at least in part on a size of the jitter spread.

In a sixth aspect, alone or in combination with one or more of the first through fifth aspects, the one or more resources are selected based at least in part on a channel busy ratio value.

In a seventh aspect, alone or in combination with one or more of the first through sixth aspects, the one or more resources are selected based at least in part on a percentile of the jitter spread.

Although Fig. 4 shows example blocks of process 400, in some aspects, process 400 may include additional blocks, fewer blocks, different blocks, or differently arranged blocks than those depicted in Fig. 4. Additionally, or alternatively, two or more of the blocks of process 400 may be performed in parallel.

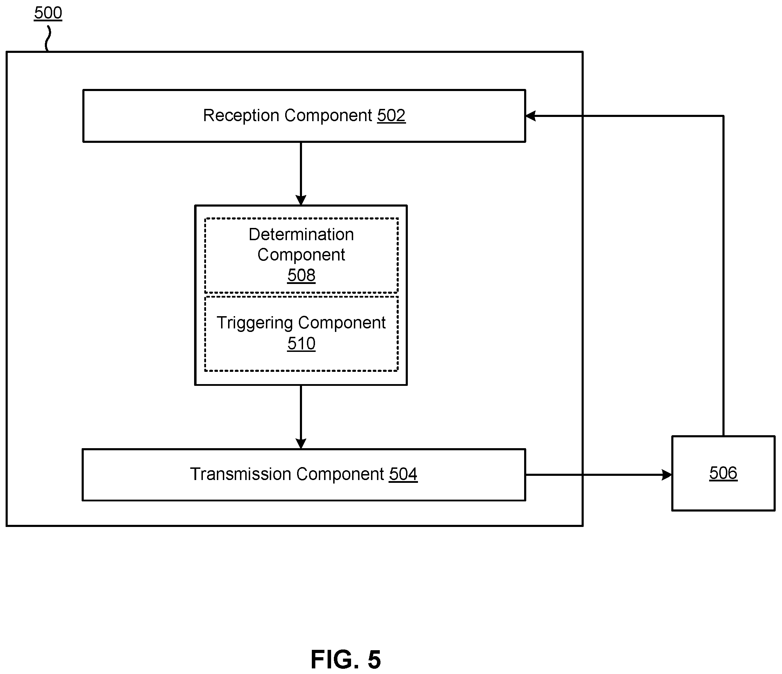

Fig. 5 is a block diagram of an example apparatus 500 for wireless communication. The apparatus 500 may be a transmitter device, or a transmitter device may include the apparatus 500. In some aspects, the apparatus 500 includes a reception component 502 and a transmission component 504, which may be in communication with one another (for example, via one or more buses and/or one or more other components). As shown, the apparatus 500 may communicate with another apparatus 506 (such as a UE, a base station, or another wireless communication device) using the reception component 502 and the transmission component 504. As further shown, the apparatus 506 may include one or more of a determination component 508, a triggering component 510, or a reselection component 512, among other examples.

In some aspects, the apparatus 500 may be configured to perform one or more operations described herein in connection with Figs. 3A-3F. Additionally, or alternatively, the apparatus 500 may be configured to perform one or more processes described herein, such as process 400 of Fig. 4 and/or the like. In some aspects, the apparatus 500 and/or one or more components shown in Fig. 5 may include one or more components of the transmitter device described above in connection with Fig. 2. Additionally, or alternatively, one or more components shown in Fig. 5 may be implemented within one or more components described above in connection with Fig. 2. Additionally, or alternatively, one or more components of the set of components may be implemented at least in part as software stored in a memory. For example, a component (or a portion of a component) may be implemented as instructions or code stored in a non-transitory computer-readable medium and executable by a controller or a processor to perform the functions or operations of the component.

The reception component 502 may receive communications, such as reference signals, control information, data communications, or a combination thereof, from the apparatus 506. The reception component 502 may provide received communications to one or more other components of the apparatus 500. In some aspects, the reception component 502 may perform signal processing on the received communications (such as filtering, amplification, demodulation, analog-to-digital conversion, demultiplexing, deinterleaving, de-mapping, equalization, interference cancellation, or decoding, among other examples), and may provide the processed signals to the one or more other components of the apparatus 506. In some aspects, the reception component 502 may include one or more antennas, a demodulator, a MIMO detector, a receive processor, a controller/processor, a memory, or a combination thereof, of the transmitter device described above in connection with Fig. 2.

The transmission component 504 may transmit communications, such as reference signals, control information, data communications, or a combination thereof, to the apparatus 506. In some aspects, one or more other components of the apparatus 506 may generate communications and may provide the generated communications to the transmission component 504 for transmission to the apparatus 506. In some aspects, the transmission component 504 may perform signal processing on the generated communications (such as filtering, amplification, modulation, digital-to-analog conversion, multiplexing, interleaving, mapping, or encoding, among other examples), and may transmit the processed signals to the apparatus 506. In some aspects, the transmission component 504 may include one or more antennas, a modulator, a transmit MIMO processor, a transmit processor, a controller/processor, a memory, or a combination thereof, of the transmitter device described above in connection with Fig. 2. In some aspects, the transmission component 504 may be collocated with the reception component 502 in a transceiver.

The reception component 502 may receive, for example, information identifying channel conditions, such as a channel busy ratio, which may enable the determination component 508 to determine whether to reselect SPS resources. The determination component 508 may determine whether a criterion is satisfied for reselecting SPS resources, such as whether a threshold quantity of late packet arrivals has occurred, whether an accumulation of reserved frames has caused a threshold latency, and/or the like. Additionally, or alternatively, the determination component 508 may identify SPS resources to select during an SPS resource reselection procedure, such as based at least in part on a packet jitter. The triggering component 510 may trigger initiation of an SPS resource reselection procedure, such as based at least in part on the determination that the criterion is satisfied for reselecting SPS resources. The reselection component 512 may perform reselection of SPS resources, such as by identifying available SPS resources, communicating with the apparatus 506 to identify available SPS resources, and/or the like. The transmission component 504 may transmit data to the apparatus 506, such as packets received at the transmission component 504 for transmission using SPS resources.

The number and arrangement of components shown in Fig. 5 are provided as an example. In practice, there may be additional components, fewer components, different components, or differently arranged components than those shown in Fig. 5. Furthermore, two or more components shown in Fig. 5 may be implemented within a single component, or a single component shown in Fig. 5 may be implemented as multiple, distributed components. Additionally or alternatively, a set of (one or more) components shown in Fig. 5 may perform one or more functions described as being performed by another set of components shown in Fig. 5.

The foregoing disclosure provides illustration and description, but is not intended to be exhaustive or to limit the aspects to the precise form disclosed. Modifications and variations may be made in light of the above disclosure or may be acquired from practice of the aspects.

As used herein, the term "component" is intended to be broadly construed as hardware, firmware, and/or a combination of hardware and software. As used herein, a processor is implemented in hardware, firmware, and/or a combination of hardware and software. It will be apparent that systems and/or methods described herein may be implemented in different forms of hardware, firmware, and/or a combination of hardware and software. The actual specialized control hardware or software code used to implement these systems and/or methods is not limiting of the aspects. Thus, the operation and behavior of the systems and/or methods were described herein without reference to specific software code-it being understood that software and hardware can be designed to implement the systems and/or methods based, at least in part, on the description herein.

As used herein, satisfying a threshold may, depending on the context, refer to a value being greater than the threshold, greater than or equal to the threshold, less than the threshold, less than or equal to the threshold, equal to the threshold, not equal to the threshold, and/or the like.

## Claims

1. A method of wireless communication performed by a transmitter device (110, 120), comprising:
determining (410) that a criterion relating to semi-persistent scheduling, SPS, is satisfied, wherein the criterion relates to packet arrival times for SPS transmission, wherein a sidelink synchronization signal, SLSS, is configured and wherein the criterion is a threshold quantity of accumulated SLSS subframes satisfying a first threshold value and an SPS transmission latency satisfying a second threshold value; and
triggering (420) an SPS resource reselection based at least in part on determining that the criterion is satisfied.

2. The method of claim 1, further comprising:
identifying a jitter spread for the packet arrival times; and
wherein triggering the SPS resource reselection comprises:
reselecting SPS resources to one or more resources determined based at least in part on a size of the jitter spread.

3. The method of claim 2, wherein the one or more resources are selected based at least in part on a channel busy ratio value.

4. The method of claim 2, wherein the one or more resources are selected based at least in part on a percentile of the jitter spread.

5. A computer program comprising instructions which, when the program is executed by a computer, cause the computer to carry out the steps of a method according to any of claims 1 to 4.

6. An apparatus for wireless communication, comprising:
means for determining that a criterion relating to semi-persistent scheduling, SPS, is satisfied, wherein the criterion relates to packet arrival times for SPS transmission, wherein a sidelink synchronization signal, SLSS, is configured and wherein the criterion is a threshold quantity of accumulated SLSS subframes satisfying a first threshold value and an SPS transmission latency satisfying a second threshold value; and
means for triggering an SPS resource reselection based at least in part on determining that the criterion is satisfied.

7. The apparatus of claim 6, further comprising:
means for identifying a jitter spread for the packet arrival times; and
wherein the means for triggering the SPS resource reselection comprises:
means for reselecting SPS resources to one or more resources determined based at least in part on a size of the jitter spread.

## Patentansprüche

1. Ein Verfahren zur drahtlosen Kommunikation, das von einer Übertragungsvorrichtung (110, 120) durchgeführt wird, aufweisend:
Bestimmen (410), dass ein Kriterium in Bezug auf semi-persistentes Scheduling, SPS, erfüllt ist, wobei sich das Kriterium auf Paketankunftszeiten für SPS-Übertragung bezieht, wobei ein Sidelink-Synchronisationssignal, SLSS, konfiguriert ist und wobei das Kriterium eine Schwellenmenge von akkumulierten SLSS-Unterrahmen ist, die einen ersten Schwellenwert erfüllen, und eine SPS-Übertragungslatenz, die einen zweiten Schwellenwert erfüllt; und
Auslösen (420) einer SPS-Ressourcenneuauswahl basierend zumindest teilweise auf dem Bestimmen, dass das Kriterium erfüllt ist.

2. Das Verfahren gemäß Anspruch 1, weiter aufweisend:
Identifizieren einer Jitterspreizung für die Paketankunftszeiten; und
wobei das Auslösen der SPS-Ressourcenneuauswahl aufweist:
Neuauswählen von SPS-Ressourcen zu einer oder mehreren Ressourcen, die basierend zumindest teilweise auf einer Größe der Jitterspreizung bestimmt werden.

3. Das Verfahren gemäß Anspruch 2, wobei die eine oder die mehreren Ressourcen basierend zumindest teilweise auf einem Kanalbelegungsverhältniswert ausgewählt werden.

4. Das Verfahren gemäß Anspruch 2, wobei die eine oder die mehreren Ressourcen basierend zumindest teilweise auf einem Perzentil der Jitterspreizung ausgewählt werden.

5. Ein Computerprogramm, das Anweisungen aufweist, die, wenn das Programm von einem Computer ausgeführt wird, den Computer veranlassen, die Schritte eines Verfahrens gemäß einem der Ansprüche 1 bis 4 auszuführen.

6. Eine Vorrichtung zur drahtlosen Kommunikation, aufweisend:
Mittel zum Bestimmen, dass ein Kriterium in Bezug auf semi-persistentes Scheduling, SPS, erfüllt ist, wobei sich das Kriterium auf Paketankunftszeiten für SPS-Übertragung bezieht, wobei ein Sidelink-Synchronisationssignal, SLSS, konfiguriert ist und wobei das Kriterium eine Schwellenmenge von akkumulierten SLSS-Unterrahmen ist, die einen ersten Schwellenwert erfüllen, und eine SPS-Übertragungslatenz, die einen zweiten Schwellenwert erfüllt; und
Mittel zum Auslösen einer SPS-Ressourcenneuauswahl basierend zumindest teilweise auf dem Bestimmen, dass das Kriterium erfüllt ist.

7. Die Vorrichtung gemäß Anspruch 6, weiter aufweisend:
Mittel zum Identifizieren einer Jitterspreizung für die Paketankunftszeiten; und
wobei das Mittel zum Auslösen der SPS-Ressourcenneuauswahl aufweist:
Mittel zum Neuauswählen von SPS-Ressourcen zu einer oder mehreren Ressourcen, die basierend zumindest teilweise auf einer Größe der Jitterspreizung bestimmt werden.

## Revendications

1. Un procédé de communication sans fil réalisé par un dispositif émetteur (110, 120), comprenant :
la détermination (410) qu'un critère concernant une planification semi-persistante, SPS, est satisfait, dans lequel le critère concerne les temps d'arrivée de paquets pour la transmission SPS, dans lequel un signal de synchronisation sidelink, SLSS, est configuré et dans lequel le critère est une quantité seuil de sous-trames SLSS accumulées satisfaisant une première valeur seuil et une latence de transmission SPS satisfaisant une seconde valeur seuil ; et
le déclenchement (420) d'une resélection de ressource SPS sur la base au moins en partie de la détermination que le critère est satisfait.

2. Le procédé selon la revendication 1, comprenant en outre :
l'identification d'un étalement de gigue pour les temps d'arrivée des paquets ; et
dans lequel le déclenchement de la resélection de ressource SPS comprend :
la resélection de ressources SPS vers une ou plusieurs ressources déterminées sur la base au moins en partie d'une dimension de l'étalement de gigue.

3. Le procédé selon la revendication 2, dans lequel les une ou plusieurs ressources sont sélectionnées sur la base au moins en partie d'une valeur de rapport d'occupation de canal.

4. Le procédé selon la revendication 2, dans lequel les une ou plusieurs ressources sont sélectionnées sur la base au moins en partie d'un centile de l'étalement de gigue.

5. Un programme de calculateur comprenant des instructions qui, lorsque le programme est exécuté par un calculateur, amènent le calculateur à réaliser les étapes d'un procédé selon l'une des revendications 1 à 4.

6. Un appareil pour la communication sans fil, comprenant :
un moyen pour déterminer qu'un critère concernant une planification semi-persistante, SPS, est satisfait, dans lequel le critère concerne les temps d'arrivée de paquets pour la transmission SPS, dans lequel un signal de synchronisation sidelink, SLSS, est configuré et dans lequel le critère est une quantité seuil de sous-trames SLSS accumulées satisfaisant une première valeur seuil et une latence de transmission SPS satisfaisant une seconde valeur seuil ; et
un moyen pour déclencher une resélection de ressource SPS sur la base au moins en partie de la détermination que le critère est satisfait.

7. L'appareil selon la revendication 6, comprenant en outre :
un moyen pour identifier un étalement de gigue pour les temps d'arrivée de paquets ; et
dans lequel le moyen pour déclencher la resélection de ressource SPS comprend :
un moyen pour resélectionner des ressources SPS vers une ou plusieurs ressources déterminées sur la base au moins en partie d'une dimension de l'étalement de gigue.
